(19) Europäisches Patentamt
European Patent Office
Office européen des brevets

(11) **EP 4 428 401 A1**

(12) **EUROPEAN PATENT APPLICATION**

(43) Date of publication:
**11.09.2024 Bulletin 2024/37**

(21) Application number: **23161108.8**

(22) Date of filing: **10.03.2023**

(51) International Patent Classification (IPC):
**F16H 61/431** (2010.01)    **F16H 61/444** (2010.01)

(52) Cooperative Patent Classification (CPC):
**F16H 61/444; F16H 61/431;** F16H 47/02;
F16H 59/38; F16H 59/40; F16H 59/44; F16H 61/421

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventors:
• **Barrera Villalpando, Abraham
89075 Ulm (DE)**
• **Manstetten, Rüdiger
89542 Herbrechtingen (DE)**
• **Werner, Franz
89129 Langenau (DE)**

(54) **METHOD FOR CALIBRATING A COUPLING SYSTEM OF A MECHANICAL TRANSMISSION**

(57)    The present invention relates to a method for controlling a hydrostatic travel drive (1) of a mobile working machine, wherein the hydrostatic travel drive is provided with a first hydraulic machine (4) with adjustable displacement volume and with a second hydraulic machine (6) and a third hydraulic machine (8), wherein the first hydraulic machine can be coupled or is coupled to a drive machine (20), wherein the pressure medium coming from the first hydraulic machine can be conveyed to the second and to the third hydraulic machine (6, 8), which are arranged parallel to each other, the second hydraulic machine (6) being rotatably connectable by means of a clutch (38) to at least one wheel or chain or axle to be driven, the third hydraulic machine (8) being rotatably connected to the at least one wheel or chain or axle, wherein the displacement volume of said first hydraulic machine (4) can be regulated based on a control

pressure,

**characterized in that** the method comprises the following steps:
a. Receiving a driving demand for the mobile working machine;
b. Providing a request for the opening of the clutch so that the second hydraulic machine (6) will not be anymore rotationally connected to the at least one wheel or chain or axle;
c. Reducing the displacement volume of said first hydraulic machine (4) by reducing said control pressure to an unload level which is dependent on the driving demand;
d. Opening said clutch;
e. Increasing the displacement of said first hydraulic machine (4) by increasing said control pressure to a load level which is dependent on said driving demand.

Fig. 1

EP 4 428 401 A1

**Description**

TECHNICAL FIELD

The present invention relates to a Method for controlling a hydrostatic travel drive of a mobile working machine. Furthermore, the present invention relates to a control unit arranged to perform such a method and a mobile working machine having such a control unit.

PRIOR ART

In order to increase the transmission ratio range of a traction drive, hydrostatic transmissions with two hydraulic motors which are operated fluidically in parallel are known from the state of the art. The drive shaft power thereof can be added via a compounding transmission of the hydrostatic transmission and transmitted, for instance, to a vehicle axle. For example, at a low velocity both hydraulic motors are in parallel operation and therefore permit a high traction force. Given a predefined delivery quantity of the hydraulic pump and against the background that the reduction of the swept volumes of the hydraulic motors entails a decreasing efficiency level, the velocity which can be achieved with two motors is limited.

In order to obtain a driving range of a relatively high velocity, one of the hydraulic motors (temporary motor) can be disconnected from the output by means of a clutch. The entire volume flow of the hydraulic pump is therefore directed via the remaining, usually smaller hydraulic motor (permanent motor), which permits relatively high rotational speeds and therefore relatively high velocities.

If both hydraulic motors then contribute again to the transmission of power, the clutch must be closed. For this purpose, the hydraulic motor which is previously disconnected from the output has to be accelerated from a wheeling state to its working rotational speed. This acceleration process is to take place both quickly and as far as possible without being noticed by the driver.

The clutch is activated, for example, by means of a hydraulic cylinder. Depending on the design, the closing of the clutch is brought about here either by the application of pressure medium to the hydraulic cylinder (positive clutch) or by the discharging of pressure medium from the hydraulic cylinder (negative clutch).

In order to prevent an increase of the pressure, due to the fact that the temporary motor is deactivated when the clutch is going to be opened, patent document EP 3 623 666 A1 describes a way to compensate this pressure increase in different ways. One of these ways is represented by a decrease of the displacement of the hydraulic pump. In that way the volume flow going to the motors is decreased and an increase in pressure is prevented from occurring. The displacement of the hydraulic pump is reduced by decreasing a control pressure of the pump.

According to the state of the art, when it is detected that the clutch is completely disengaged, the control pressure is then increased again until it reaches the same value, the control pressure had before the disengagement of the temporary motor was started.

The main drawback of such a method is that, when the control pressure is increased, an unexpected acceleration of the mobile working machine can occur.

In contrast to this, the present invention describes a new method that can be used for disengaging the temporary motor and at the same time preventing the mobile working machine from unexpected acceleration during said disengagement process.

SUMMARY

The present invention is based on the idea of having a drive demand (drive pedal) dependent compensation of the pump both in the load and in the unload phase, in that way undesirable acceleration of the mobile working machine are prevented from occurring.

According to an embodiment of the present invention a method for controlling a hydrostatic travel drive (1) of a mobile working machine is provided, wherein the hydrostatic travel drive is provided with a first hydraulic machine (4) with adjustable displacement volume and with a second hydraulic machine (6) and a third hydraulic machine (8), wherein the first hydraulic machine can be coupled or is coupled to a drive machine (20), wherein the pressure medium coming from the first hydraulic machine can be conveyed to the second and to the third hydraulic machine (6, 8), which are arranged parallel to each other, the second hydraulic machine (6) being rotatably connectable by means of a clutch (38) to at least one wheel or chain or axle to be driven, the third hydraulic machine (8) being rotatably connected to the at least one wheel or chain or axle, wherein the displacement volume of said first hydraulic machine (4) can be regulated based on a control pressure ($p_{ctrl}$),

**characterized in that** the method comprises the following steps:

> a. Receiving a driving demand for the mobile working machine;
> b. Providing a request for the opening of the clutch so that the second hydraulic machine (6) will not be anymore rotationally connected to the at least one wheel or chain or axle;
> c. Reducing the displacement volume of said first hydraulic machine (4) by reducing said control pressure ($p_{ctrl}$) to an unload level ($p_{UL}$) which is dependent on the driving demand;
> d. Opening said clutch (38);
> e. Increasing the displacement of said first hydraulic machine (4) by increasing said control pressure ($p_{ctrl}$) to a load level ($p_{LL}$) which is dependent on said driving demand.

Said steps c to e are provided sequentially. The driving demand, which could be for example an acceleration request, is received from a driver by an input device, like a drive pedal or a joystick. The request for opening the clutch can be provided automatically by the control unit based at least on an actual velocity of the mobile machine. Since in both the load and unload phase, in order to calculate the load and unload level the drive request is taken in consideration, it is effectively possible to prevent the mobile machine from undeliverable accelerations.

BRIEF DESCRIPTION OF THE FIGURES

The present invention is described with reference to the enclosed figures wherein the same reference numbers refer to the same parts and/or to similar parts and/or to corresponding parts of the system. In the figures:

Figure 1 schematically shows a hydraulic diagram according to the state of the art;

Figure 2 shows a value of the control pressure used to control the first hydraulic pump during the opening of the clutch according to a preferred embodiment of the present invention;

Figure 3 shows a function used for determining the load and the unload level according to a preferred embodiment of the present invention;

Figure 4 shows the method used for compensating the control pressure offset between an actual control pressure and a predetermined value for the same according to a preferred embodiment of the present invention.

DETAILED DESCRIPTION

In the following, the present invention is described with reference to particular embodiments as shown in the enclosed figures. Nevertheless, the present invention is not limited to the particular embodiments described in the following detailed description and shown in the figures, but rather the embodiments described simply exemplify several aspects of the present invention, the scope of which is defined by the claims.

Further modifications and variations of the present invention will be clear for the person skilled in the art. The present description is thus to be considered as including all said modifications and/or variations of the present invention, the scope of which is defined by the claims.

In the present disclosure with the term "pressure medium" it is meant each type of medium, which can be pressurized and can be used to transmit power to different hydraulic elements, like an hydraulic oil.

It is to be noted that the particular physical values used for describing some working examples of the invention does not limit the scope of the invention, which is defined by the appended claims.

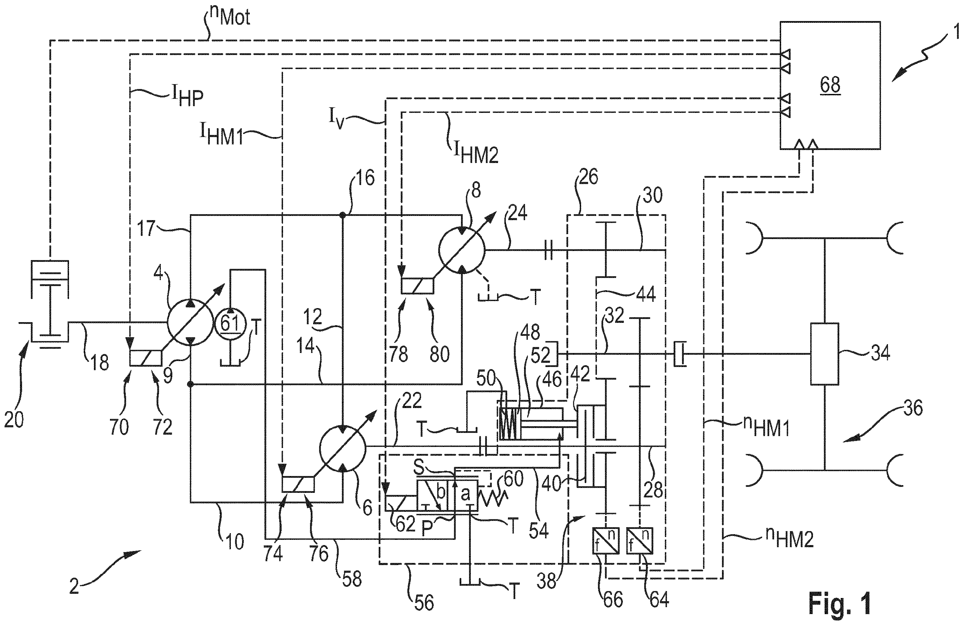

According to Figure 1, a traction drive 1 has a hydrostatic transmission 2 with a first hydraulic machine 4 operating as a hydraulic pump in traction mode of the traction drive 1 and a second a and a third hydraulic machine 6 and 8 operating as hydraulic motors in said traction mode. The traction drive is used with a mobile working machine (such as a wheel loader, telehandler, etc.). Both hydraulic motors 6, 8 are fluidically connected in parallel in a closed hydraulic circuit with the hydraulic pump 4 via working lines 10 and 12 on the one hand and 14 and 16 on the other hand. The hydraulic machines 4, 6, 8 are adjustable in their displacement volume, whereby they are each designed as an axial piston machine in swash plate design or in swash axis design. As a rule, the maximum volume flow (displacement volume) of the first hydraulic motor 6 is significantly greater than that of the second hydraulic motor 6. The ratio between the maximum volume flows of the two hydraulic motors is between 1.5 and 2.5.

It should be noted that even though both the second and third hydraulic motors 6, 8 are shown with adjustable displacement volumes in Figure 1, the present invention can also be used when the second and/or third hydraulic motors are provided with constant displacement volumes. Further, since each of said hydraulic pump 4 and said hydraulic motors 6, 8 can be used both as a pump and a motor (depending if the traction drive is in a traction mode or in a deceleration mode), in the claims and also somewhere in the description said elements are more general called first, second and third hydraulic machine.

The hydraulic pump 4 is connected via its drive shaft 18 to a prime mover 20 (drive machine) in the form of a diesel engine (or an electric motor). A first hydraulic motor 6 of the two hydraulic motors 6, 8 has a first drive shaft 22 and the second hydraulic motor 8 has a second drive shaft 24. A summation gear 26 with two input shafts 28 and 30 is connected downstream of the hydrostatic transmission 2 as a mechanical transmission. The first input shaft 28 is non-rotatably connected to the first drive shaft 22 and the second input shaft 30 is non-rotatably connected to the second drive shaft 24. An output shaft 32 of the summation gearbox 26 is non-rotatably connected to a differential 34 of a drive shaft 36.

The summation gearbox 26 comprises a clutch 38 in the form of a multi-plate clutch, which has a first clutch section 40 which is connected to the first input shaft 28 in a rotationally fixed manner. It also has a second clutch section 42, which is connected to the second input shaft 30 of the summation gearbox 26 in a rotationally fixed manner via a gearwheel arrangement 44, shown purely schematically. By actuating the clutch 38, which is accompanied by an engagement of the second clutch section 42, the two input shafts 28 and 30 and thus the two drive shafts 22 and 24 can be connected to each other in a rotationally fixed manner.

An actuating element 46 designed as a hydraulic cylinder is provided for actuating the clutch 38. Its piston 48 is coupled to the second clutch section 42 via a piston rod in a tension- and thrust-resistant manner. The hydraulic cylinder 46 has a piston chamber in which a compression spring 50 is arranged. The piston chamber is permanently connected to a tank T via a tank line. On the piston rod side, the hydraulic cylinder 46 has an annular chamber 52 which is connected via a control pressure line 54 to a connection S of a control device 56 designed as a pressure control valve. The latter has a pressure port P which is connected via a pressure line 58 to a feed pump 61 which is driven together with the hydraulic pump 4 by the drive shaft 18. The feed pump 61 sucks in pressure fluid from the tank T. Furthermore, the pressure control valve 56 has a tank connection T which is connected to the tank T.

The pressure control valve 56 is continuously adjustable and has two end positions a, b. In a first end position a, in which the valve body is preload via a spring 60, the pressure port P is connected to the control pressure port S and the port T is shut off against the port S. In a second end position b, the pressure port P is closed. In the second end position b, the pressure control valve 56, or more precisely its valve body, can be actuated via an electromagnet 62. When the solenoid is energized, and provided that the second setting b is fully assumed, the control pressure port S is connected to the tank port T and the pressure port P is shut off. In the first end position a, the annular space 52 is thus exclusively charged or filled with pressure medium, whereas in the second end position b, the annular space 52 is exclusively emptied or discharged of pressure medium. Between the two end positions a and b, control positions of the valve body are possible in which the ports P, S and T are in respective pressure medium connection with each other. For the return of the control pressure to be regulated which is present at the control pressure port S in the annular chamber 52, the annular chamber 52 is fluidically connected via a control line or a control channel to a control surface of the valve body of the pressure regulating valve 56, which is co-acting with the spring 60.

The mechanical transmission 26 further comprises a first speed sensing unit 64, via which the speed of the first input shaft 28 and thus of the first clutch section 40 and of the first drive shaft 22 can be sensed. Via a second speed detection unit 66 of the mechanical transmission 26, the speed of the second clutch section 42 and thus indirectly, in knowledge of the transmission ratio of the gear arrangement 44, the speed of the second input shaft 30 and the second drive shaft 24 can be detected.

A control unit 70 is associated with the hydraulic pump 4, which interacts with an adjustment device 72 for adjusting the displacement volume of the hydraulic pump 4. The first hydraulic motor 6 and the second hydraulic motor 8 have a control device 74 and 78 respectively and an adjustment device 76 and 80 respectively.

The prime mover 20, the control devices 70, 74 and 78, the electromagnet 62 and the speed detection units 64, 66 are each connected to the control device 68 via a signal line.

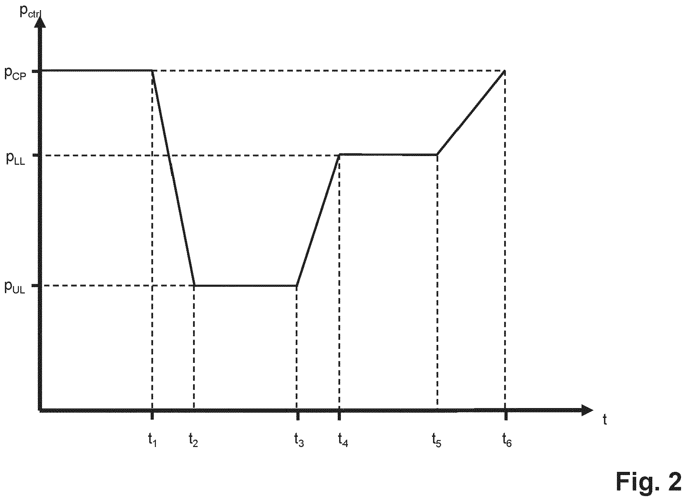

In the next paragraphs, with reference to the figures 2-4 a method for controlling a hydrostatic travel drive will be described.

In a first step a driving demand for driving the mobile working machine is received. The request can be reached from a driver of the mobile working machine by means of a drive pedal, a joystick or any type of input means which enables the driver of the mobile working machine to provide the machine with an information about the desired driving behavior.

Based on the actual velocity of the mobile working machine a request for the opening of the clutch 38 is provided, so that the second hydraulic machine 6 will not be anymore rotationally connected to the at least one wheel or chain or axle. Preferably such a request is automatically provided by the control unit 68 based on said actual driving velocity and, in some other cases, also on other parameters like the driving demand, the actual acceleration and so on.

When the request for opening the clutch 38 is provided by the control unit 68, in a further step, the displacement volume of said first hydraulic machine 4 is reduced by reducing a control pressure $p_{ctrl}$ of the first hydraulic machine 4 to an unload level which is dependent on the driving demand. The control pressure $p_{ctrl}$ is directly related to a value of the current $I_{HP}$ sent from the control unit to the adjustment device 72 of the first hydraulic machine 4. In particular, according to the state of the art, the current $I_{HP}$ is used by a control pressure valve for directly regulating the control pressure $p_{ctrl}$, which is provided for regulating the swivel angle of the first hydraulic machine.

Figure 2 shows the value of the control pressure $p_{ctrl}$ during the opening process of said clutch 38. Before the signal for opening the clutch is provided, the first hydraulic machine 4 receives a control pressure equal to $p_{CP}$, which can be about 25 bar. At the time $t_1$ a request for deactivating (opening) the clutch is provided and the control pressure $p_{ctrl}$ is progressively decreased until an unload value $p_{UL}$ at time $t_2$ is reached.

At the same time, the current $I_{HM1}$, which is configured to control the displacement of the second hydraulic machine 6, is regulated so as to decrease the displacement of the second hydraulic machine 6. Preferably, since the control of the second hydraulic machine 6 is much faster that the control of the first hydraulic machine 4, the velocity with which said displacement volume of said second hydraulic machine 6 is reduced is limited, so that a synchronous adjustment of said second hydraulic machine 6 and of said first hydraulic machine 4 can be reached, without the risk that unexpected increases of the pressure in the hydraulic traction system can occur.

Summarizing, during this unload phase the control pressure $p_{ctrl}$ is reduced via ramp to a drive-pedal dependent level $p_{UL}$ to compensate the displacement that the temporary motor (second hydraulic machine) is not demanding anymore, due to the reduction of the displacement of the same. The unload level $p_{UL}$ is configurable via parameters and is a percentage factor from the normal pump control pressure $p_{CP}$, which is a predetermined value for said control pressure.

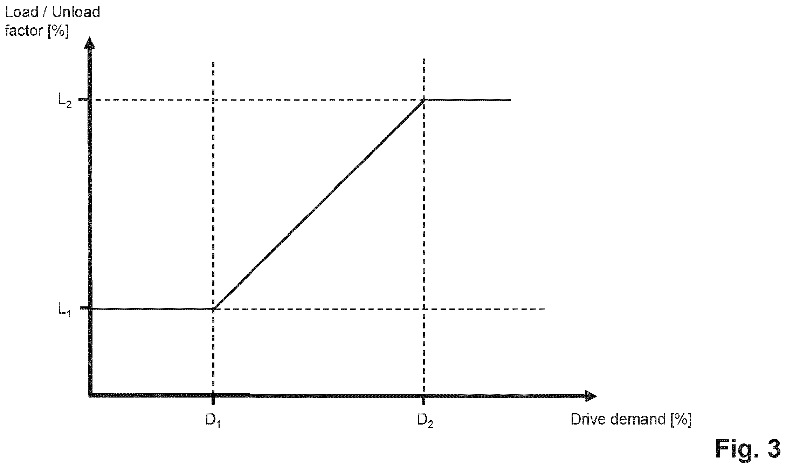

The unload ramp slope is preferably given by one parameter, which is preferably not drive-pedal dependent (however in a particular embodiment the ramp could be also drive-pedal dependent). As an example, the ramp slope can be of 20%/s. Differently, as described above, the unload level $p_{UL}$ is calculated based on the drive demand, given for example, as described above, by driver through the drive pedal. In particular, as shown in figure 3, an unload factor L is calculated based on the drive demand using a function. The unload factor L increases linearly from a lower value $L_1$, which is used for low drive demands $D_1$ to a higher level $L_2$, which is used for higher drive demands $D_2$.

The value of the drive demands $D_1$, $D_2$, and of the unload factors $L_1$, $L_2$ are determined for example by simulations, so that unexpected accelerations of the working driving machine are prevented from occurring.

For example, the drive demands $D_1$, D2 can be respectively equal to 50 and 95% and the unload factors $L_1$, $L_2$ for these specific drive demands can be equal to 30% and 40% respectively.

In this specific example, in order to obtain the unload level $p_{UL}$ the load factor L is used in this equation to determine the unload level $p_{UL}$:

$$p_{UL}= p_{CP} *L$$

Once the unload phase is finished, so that the clutch is completely open, after an unload delay at time $t_3$, the displacement of said first hydraulic machine 4 is increased by increasing said control pressure $p_{ctrl}$ to a load level $p_{LL}$ which is dependent on said driving demand.

Therefore, the control pressure $p_{ctrl}$ is adjusted via ramp to the load level $p_{LL}$. This load level $p_{LL}$ is configurable via parameters and is also percentage factor from the normal pump control pressure $p_{CP}$. The load level can be adjusted to be higher or lower than the unload level to avoid unintended acceleration. For this scope, the load level $p_{LL}$ is calculated using a load factor L which is also in this case dependent on the actual drive demand.

The load ramp slope, used for reaching the load level $p_{LL}$ is preferably given by one parameter, which is preferably not drive-pedal dependent (however in a particular embodiment the ramp could be also drive-pedal dependent). As an example, the ramp slope can be, like in the unload phase, of 20%/s. Differently, as described above, the load level $p_{LL}$ is calculated based on the drive demand, provided for example by driver through the drive pedal. In particular, as shown in figure 3, the load factor is calculated based on the drive demand using a function. The load factor L increases linearly from a lower value $L_1$, which is used for low drive demands $D_1$ to a higher level $L_2$, which is used for higher drive demands $D_2$. Also in this case the value of the drive demands $D_1$, $D_2$, and of the load factors $L_1$, $L_2$ are determined for example by simulations, so that unexpected accelerations of the working driving machine are prevented from occurring.

For example, the drive demands $D_1$, D2 can be respectively equal to 50 and 95% and the load factors $L_1$, $L_2$ for these specific drive demands can be equal to 80% and 100% respectively. This means that, for higher driver request, since the intention of the driver is already that of accelerating the mobile working machine, the control pressure is directly brought during the load phase to be equal to the predetermined value $p_{CP}$.

In this specific example, in order to obtain the load level $p_{LL}$ the load factor L is used in this equation to determine the load level $p_{LL}$:

$$p_{LL}= p_{CP} *L$$

Depending on the particular value of the load factors, the load level can be lower or higher than the unload level. The reason being that the drive demand could have been changed by the driver during this time interval from $t_1$ to $t_3$.

However, it is needed that the control pressure is finally brought to the predetermined value $p_{CP}$, so that a correct control of the traction system, and in particular of the first hydraulic machine 4 can be provided.

For that reason, in the present method the control pressure, after time $t_4$, when the load level is reached, is gradually increased any time the driver request is changed (for example at time $t_5$) so that the driver does not recognize any strange and unexpected behavior of the mobile working machine.

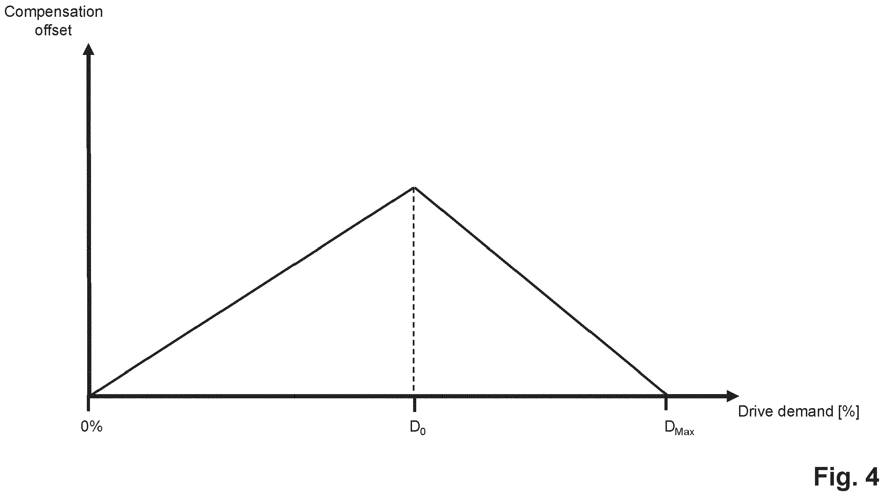

Figure 4 shows an example of how such a compensation can be done. $D_0$ represents the driver demand at the time $t_4$. When a change of the drive demand is detected, a compensation offset is calculated, which is a delta pressure, which can be added to the control pressure. As described in figures, the increment of said control pressure is proportional to the magnitude of the variation, which is detected. These steps are repeated until at said time $t_6$ said control pressure reaches the predetermined value $p_{CP}$.

The present invention also regards to a computer program adapted to execute and/or control the method described herein and a machine-readable storage medium having the computer program stored thereon.

While the present invention has been described with reference to the embodiments described above, it is clear for the skilled person that it is possible to realize several modifications, variations and improvements of the present invention in the light of the teaching described above and within the ambit of the enclosed claims without departing from the spirit and the scope of protection of the invention.

In addition, those areas in which it is believed that those of ordinary skill in the art are familiar, have not been described herein in order not to unnecessarily obscure the invention described.

Accordingly, the invention is not to be limited by the specific illustrative embodiments, but only by the scope of the appended claims.

## Claims

1. Method for controlling a hydrostatic travel drive (1) of a mobile working machine, wherein the hydrostatic travel drive is provided with a first hydraulic machine (4) with adjustable displacement volume and with a second hydraulic machine (6) and a third hydraulic machine (8), wherein the first hydraulic machine can be coupled or is coupled to a drive machine (20), wherein the pressure medium coming from the first hydraulic machine can be conveyed to the second and to the third hydraulic machine (6, 8), which are arranged parallel to each other, the second hydraulic machine (6) being rotatably connectable by means of a clutch (38) to at least one wheel or chain or axle to be driven, the third hydraulic machine (8) being rotatably connected to the at least one wheel or chain or axle, wherein the displacement volume of said first hydraulic machine (4) can be regulated based on a control pressure (pctrl),
**characterized in that** the method comprises the following steps:

   a. Receiving a driving demand for the mobile working machine;
   b. Providing a request for the opening of the clutch so that the second hydraulic machine (6) will not be anymore rotationally connected to the at least one wheel or chain or axle;
   c. Reducing the displacement volume of said first hydraulic machine (4) by reducing said control pressure ($p_{ctrl}$) to an unload level ($p_{UL}$) which is dependent on the driving demand;
   d. Opening said clutch (38);
   e. Increasing the displacement of said first hydraulic machine (4) by increasing said control pressure ($p_{ctrl}$) to a load level ($p_{LL}$) which is dependent on said driving demand.

2. Method according to claim 1, wherein in said step c and/or step e said driving demand is detected at the beginning of each of said steps.

3. Method according to any of claims 1 or 2, wherein after said step e. has been completed, so that said control pressure ($p_{ctrl}$) has reached said load level ($p_{LL}$), the method comprises also the following steps

   f. Detecting a variation of said driving demand;
   g. Increasing the control pressure ($p_{ctrl}$) based on said detected variation.

4. Method according to claim 3, wherein the increment of said control pressure ($p_{ctrl}$) in said step g. is proportional to the magnitude of said variation.

5. Method according to claim 3 or 4, wherein said steps f. and g. are repeated until said control pressure ($p_{ctrl}$) reaches a predetermined value ($p_{CP}$).

6. Method according to any of claims 1 to 5, wherein said second hydraulic machine (6) has an adjustable displacement volume, wherein in said step c. when the displacement volume of said first hydraulic machine (4) is reduced, the displacement volume of said second hydraulic machine (6) is also reduced.

7. Method according to claim 6, wherein the velocity with which said displacement volume of said second hydraulic machine (6) is reduced is limited, so that a synchronous adjustment of said second hydraulic machine (6) and of said first hydraulic machine (4) can be reached.

8. Control unit (68) which is arranged to perform a method according to any one of claims 1 to 7.

9. A mobile working machine comprising a hydrostatic traction drive (1), wherein the hydrostatic traction drive is provided with a first hydraulic machine (4) with adjustable displacement volume and with a second hydraulic machine (6) and a third hydraulic machine (8), wherein the first hydraulic machine is couplable or coupled to a drive machine (20), wherein the pressure medium coming from the first hydraulic machine can be delivered to the second and to the third hydraulic machine (6, 8) which are arranged parallel to each other, the second hydraulic machine (6) being rotatably connectable by means of a clutch (38) to at least one wheel or chain or axle to be driven, the third hydraulic machine (8) being rotatably connected to the at least one wheel or chain or axle, wherein the working machine comprises a control unit according to claim 8.

10. Computer program adapted to execute and/or control the method according to any one of claims 1 to 7.

11. A machine-readable storage medium having a computer program stored thereon according to claim 10.

Fig. 1

Fig. 2

Fig. 3

Compensation
offset

Drive demand [%]

0%

$D_0$

$D_{Max}$

**Fig. 4**

Europäisches
Patentamt

European
Patent Office

Office européen
des brevets

# EUROPEAN SEARCH REPORT

Application Number

EP 23 16 1108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/136624 A1 (KITAO SHINICHI [JP] ET AL) 30 May 2013 (2013-05-30) <br> * paragraphs [0037], [0039], [0042] - [0045]; figures 1-3 * <br> ----- | 1-11 | INV. <br> F16H61/431 <br> F16H61/444 |
| A | US 2017/081826 A1 (FERRACIN PAOLO [IT] ET AL) 23 March 2017 (2017-03-23) <br> * paragraphs [0012] - [0015]; claim 1 * <br> ----- | 1-11 | |

TECHNICAL FIELDS
SEARCHED      (IPC)

F16H
E02F

The present search report has been drawn up for all claims

| Place of search | Date of completion of the search | Examiner |
|---|---|---|
| Munich | 31 July 2023 | Meritano, Luciano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................................
& : member of the same patent family, corresponding
    document

EPO FORM 1503 03.82 (P04C01)

## EP 4 428 401 A1

### ANNEX TO THE EUROPEAN SEARCH REPORT
### ON EUROPEAN PATENT APPLICATION NO.

EP 23 16 1108

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2023

| Patent document cited in search report | | Publication date | Patent family member(s) | | Publication date |
|---|---|---|---|---|---|
| US 2013136624 | A1 | 30-05-2013 | CN | 103069198 A | 24-04-2013 |
| | | | EP | 2594828 A1 | 22-05-2013 |
| | | | JP | 5119349 B2 | 16-01-2013 |
| | | | JP | 2012229790 A | 22-11-2012 |
| | | | US | 2013136624 A1 | 30-05-2013 |
| | | | WO | 2012147572 A1 | 01-11-2012 |
| US 2017081826 | A1 | 23-03-2017 | BR | 112016020461 B1 | 23-02-2021 |
| | | | CN | 106104101 A | 09-11-2016 |
| | | | EP | 3114373 A1 | 11-01-2017 |
| | | | US | 2017081826 A1 | 23-03-2017 |
| | | | WO | 2015132175 A1 | 11-09-2015 |

EPO FORM P0459

For more details about this annex : see Official Journal of the European Patent Office, No. 12/82

**EP 4 428 401 A1**

**Patent documents cited in the description**

- EP 3623666 A1